Europäisches Patentamt

European Patent Office

Office européen des brevets

(11) Publication number: **0 127 332**
A2

# EUROPEAN PATENT APPLICATION

(21) Application number: 84302886.1

(22) Date of filing: 30.04.84

(51) Int. Cl.³: **A 01 N 25/12**
**A 01 N 25/26, C 05 G 3/00**

(30) Priority: 03.05.83 GB 8312030

(43) Date of publication of application:
05.12.84 Bulletin 84/49

(84) Designated Contracting States:
AT BE CH DE FR GB IT LI LU NL SE

(71) Applicant: LYTAG LIMITED
Cleveland House Cleveland Road
Hemel Hempstead Herts HP2 7EY(GB)

(72) Inventor: Buttler, Frank G.
1 Church Garth Great Smeaton
North Allerton North Yorkshire(GB)

(74) Representative: Frankland, Nigel Howard et al,
FORRESTER & BOEHMERT Widenmayerstrasse 4/l
D-8000 München 22(DE)

(54) An agro-chemical composition.

(57) A material containing an agro-chemical agent consists of porous pellets or particles or sintered fly ash that have been emersed in a hot aqueous solution of an agro-chemical agent such as a fertilizer, pesticide and/or fungicide. The pellets are dried and when subsequently incorporated in a compost or applied to a field gradually release the agro-chemical agent over a period of time. The pellets or particles may be coated with a coating to delay the release of the agro-chemical agent such as a semi-permeable coating, or a coating of low water permeability, or a coating of a biodegradable material.

EP 0 127 332 A2

Croydon Printing Company Ltd.

Title: An agro-chemical composition

This invention relates to an agro-chemical composition and more particularly relates to a carrier which carries an agro-chemical active agent.

In this specification the term "agro-chemical agent" is utilised to
mean any element, chemical compound or chemical composition, or combination thereof intended or adapted to be utilised in connection with the
treating of soil or the growing of plants. Thus the phrase includes
fertilizers, pesticides, fungicides and soil treating agents but is not specifically restricted merely to these agents.

At the present time, when agro-chemical agents are applied to the
soil, it is relatively common to apply the appropriate agents directly to the
soil either in the form of a powder or in the form of an aqueous solution.
Thus a large quantity of the agent becomes immediately available in the
soil, but the agent is relatively rapidly leached from the soil by the action of
rain, and thus the agro-chemical agent has to be re-applied at regular
intervals if an adequate level of the active agent is to be maintained in or
on the soil.

It has been proposed to provide fertilizers or other agro-chemical
agents in the form of pellets that are coated with soluble or bio-degradable
coatings to enable the release of the agro-chemical agent to be spread over
a period of time. It has also been proposed to provide arrangements in
which the agro-chemical agent is in the form of pellets that are coated with
a semi-permeable material so that the active agent can pass through the
semi-permeable material over a period of time. These prior proposed
materials are expensive and do not provide any long term benefit to the soil.

According to this invention there is provided a material containing an agro-chemical agent, said material comprising porous pellets or particles, at least some of the pores containing said agro-chemical agent.

Preferably said porous pellets or particles comprise pellets or particles of sintered fly ash, but may comprise pellets or particles of expanded clay, or of expanded shale, or of expanded slate, or of pumice. Alternatively said pellets may be particles comprising pellets or particles of expanded or foamed plastics material, such as expanded polystyrene or polyurethane foam.

Preferably the agro-chemical agent comprises a fertilizer, but may comprise a pesticide or fungicide. Advantageously the particles or pellets are provided with a coating which delays or controls the release of the agro-chemical agent when the particles or pellets are introduced to a compost or applied to the soil. The said coating may be a semi-permeable coating so that the agro-chemical agent passes through the coating by osmosis, or a coating of a predetermined low water permeability, the permeability of the coating determining the rate at which the agro-chemical agent is leached from the pellets or particles by water, or may comprise a biodegradable plastics material (which may be applied to the particles or pellets in the vapor phase). The coating may also be a water soluble coating.

Advantageously the particles or pellets have coatings of different thicknesses so that the particles or pellets release the agro-chemical agent at different times and/or at different rates. It is envisaged that at least some of the particles having a coating of one thickness may contain a different agro-chemical agent to the particles having another thickness.

The invention also relates to a method of making a material containing an agro-chemical agent, said method comprising the step of creating porous pellets or particles and introducing an agro-chemical agent to the pores of said porous pellets or particles. Preferably said porous particles or pellets are created by sintering fly ash, clay or shale and said agro-chemical agent is introduced to the pores by immersing the porous pellets or particles in an aqueous solution of the agro-chemical agent and subsequently withdrawing the pellets or particles from the solution and permitting the pellets or particles to dry. The method may include the subsequent step of applying a coating to the particles or pellets to delay or control the eventual release of the agro-chemical agent.

The invention also provides a method of applying an agro-chemical agent to a plant or crop said method comprising the step of applying a material according to the invention to (or incorporating such a material in) a compost or soil in which the plant or crop is to be grown or is growing.

In order that the invention may be more readily understood and so that further features thereof may be appreciated, the invention will now be described by way of example.

When making a material in accordance with the present invention a suitable starting material is fly ash. Fly ash is created when coal is burnt, and is thus available at power stations and other locations where coal is consumed in large quantities.

The fly ash is sintered to make a hardened porous material. This is accomplished by adding water to the fly ash, and subsequently igniting and sintering the resultant pellets at a high temperature. One particular method is described in detail in British Patent Specification No. 1,329,704.

An appropriate agro-chemical agent is then introduced to the pores of the resultant hardened porous material, and it is envisaged that this may be accomplished by immersing the porous material in a hot concentrated aqueous solution of the appropriate agro-chemical agent. The porous material is then removed from the solution and is permitted to dry, the result being that the porous material contains the agro-chemical agent within the pores of the material.

The resultant material may be utilised directly as an additive to soil or compost. Thus the material may be utilised by horticulturalists or market gardeners when making up soil or compost for use when growing plants in pots or other similar containers, or the material may be applied directly to the ground, whether out of doors or in greenhouses. The agro-chemical agent within the pores of the material will gradually be released to the surrounding soil or compost by the leaching action of water applied to the soil or compost. Thus the appropriate agro-chemical agent will be made available to the roots of any plants grown in the soil or compost over a protracted period of time, thus making the repeated application of fertilizers unnecessary. The sintered fly ash will, of course, remain in the soil and this is expected to prove to be beneficial, particularly where the soil is a hard clay, since the sintered fly ash alone will serve to "lighten" the soil and improve the drainage of the soil, also making the soil "warmer" to the benefit of the plants grown in the soil. Thus, even when all the agro-chemical agents have been leached from the sintered fly ash, the material may improve the condition of the soil to which it has been applied.

The agro-chemical agent may comprise a simple fertilzier, such as ammonium phosphate or potassium phosphate, or may comprise a combination of fertilizers, such as ammonium phosphate and potassium nitrate. The precise composition of the agro-chemical agent introduced to the sintered fly ash will be selected in accordance with the precise requirements of the crop or plants to which the resultant material is to be applied.

Whilst the agro-chemical agent will be released by the above described sintered fly ash over a period of time, the duration of the period of time during which the agent is released may be prolonged by applying an appropriate coating to the particles of sintered fly ash after the agro-chemical agent has been introduced to the pores of the sintered fly ash. Thus the particles may be provided with a semi-permeable coating through which the agro-chemical agent may be slowly leached by the action of water. The rate of leaching will depend upon the laws of osmosis, and this may prove to be very beneficial. Alternatively the particles may be provided with a coating having a low water permeability, and thus water will only be permitted to enter the particles at a relatively low rate depending upon the precise permeability of the coating. Such a coating may be of a resin material which may be of such a composition that it eventually breaks down due to bacteriological action in the soil, releasing ammonia into the soil in a form which can be utilised by plants growing in the soil. Alternatively again the pellets may be coated with a biodegradable plastics material coating which may be applied to the pellets in the vapor phase. When such a coating has been biodegraded the agro-chemical agent within the respective pellet will be released. Alternatively the pellets may be coated with a coating of a low solubility that will dissolve over a period of time to release the agro-chemical agent.

It is to be appreciated that by adjusting the thickness of the coating applied to any particular pellet of sintered fly ash the rate of dissemination of the agro-chemical agent to the soil, or the time lag before any of the agro-chemical agent will be disseminated can be predetermined. Thus it would be possible to prepare a variety of batches of material, each having a different coating, or each having a coating of a different thickness to that provided in the other batches. Samples of pellets from the various batches could then be mixed together to provide a final product which would provide a general and gradual release of the appropriate agro-chemical agents at appropriate times after application of the material. Of course, the particular agro-chemical agent utilised in the formation of each batch of pellets as described above could be carefully selected having regard to the precise time after the application of the pellets to the ground at which the active agent within that batch of pellets is to be released. Thus, if one batch of pellets has such a coating that it is envisaged that the agro chemical agent in those pellets will be released at a time when the crop in question is very susceptible to attack by a particular pest, a pesticide specific to that pest could beneficially be incorporated in those pellets. Also, of course, the various batches of pellets could be carefully created having regard to the nutritional requirements of the crop to which the pellets are to be applied.

As has been mentioned above, a material in accordance with the present invention may be utilised in connection with the creation of a compost for use by horticulturalists and market gardeners, especially when the compost is to be utilised in connection with the growing of plants in the pots and containers. Also the material may be applied directly to fields by farmers and may, of course, also be utilised on a domestic scale in gardens and on allotments.

Sintered fly ash contains potassium oxide, and it is believed that this potassium will be released into the soil over a period of years, thus providing a further advantage of utilising a material in accordance with the present invention.

Whilst the invention has been described by way of example it is to be noted that many modifications may be made without departing from the scope of the present invention. Thus, instead of utilising sintered fly ash as the starting material it would be possible to utilise heat expanded clay, such as the expanded clays known under the trade designations "Leca", "Keram-zite" and "Aglite". Other heat expanded materials, such as heat expanded shales and slates could also be utilised. Pumice is a naturally occurring porous material that could be used, and this particular material contains approximately 9% potassium oxide which may well prove to be beneficial. However, it is to be understood that other porous materials may be suitable for use in certain circumstances, such as expanded polystyrene or even expanded polyurethane foam. It is envisaged that these materials may be particularly advantageous for use in the formation of composts to be utilised specifically for the growing of plants in containers such as flower pots or growing bags.

Whilst the specification discloses the step of immersing the porous material in a hot concentrated aqueous solution of the agro-chemical agent it is conceivable that, if an appropriate agro-chemical agent is utilised, the porous material may be immersed in a hot melt of the agro-chemical agent, or may be immersed in a solution formed with a non-aqueous solvent. Again it is conceivable that if an appropriate agro-chemical agent is utilised the agent may be sublimed to re-condense on the porous material.

The man skilled in the art of botany or horticulture will be able to determine precisely which material should be incorporated into the porous material as the agro-chemical agent having regard to the crop or crops on which the end product is to be utilised.

The features disclosed in the foregoing description, in the following claims and/or in the accompanying drawings may, both separately and in any combination thereof, be material for realising the invention in diverse forms thereof.

CLAIMS:

1. A material containing an agro-chemical agent, said material comprising porous pellets or particles, at least some of the pores containing said agro-chemical agent.

2. A material according to claim 1 wherein said porous pellets or particles comprise pellets or particles of sintered fly ash, or of expanded clay, or of expanded shale, or of expanded slate, or of pumice.

3. A material according to claim 1 wherein said pellets or particles comprise pellets or particles of expanded or foamed plastics material.

4. A material according to any one of the preceding claims wherein the agro-chemical agent comprises a fertilizer and/or a pesticide, and/or a fungicide.

5. A material according to any one of the preceding claims wherein the particles or pellets are provided with a coating which delays or controls the release of the agro-chemical agent when the particles or pellets are introduced to a compost or applied to soil.

6. A material according to claim 5 wherein said coating is a semi-permeable coating so that the agro-chemical agent passes through the coating by osmosis.

7. A material according to claim 5 wherein the coating is a coating of a predetermined low water permeability, the permeability of the coating determining the rate at which the agro-chemical agent is leached from the pellets or particles by water.

8. An material according to claim 5 wherein said coating comprises a biodegradable plastics material.

9. A material according to claim 5 wherein the coating is a water soluble coating.

10.     A material according to any one of claims 5 to 8 comprising particles or pellets having coatings of different thicknesses so that the particles or pellets release the agro-chemical agent at different times and/or at different rates.